# FASCICULE DE BREVET EUROPEEN

(11) **EP 0 456 573 B1**
(45) Date de publication et mention de la délivrance du brevet: **31.08.1994**
(21) Numéro de dépôt: 91401196.0
(22) Date de dépôt: 07.05.1991
(51) Int. Cl.: B60J 3/02

(54) **Procédé de fabrication d'un pare-soleil recouvert de tissu**
Verfahren zur Herstellung einer mit Stoff übergezogenen Sonnenblende
Process for making an upholstered sun visor

(30) Priorité: 11.05.1990 FR 9005933
(43) Date de publication de la demande: 13.11.1991
(73) Titulaire: ROCKWELL AUTOMOTIVE BODY SYSTEMS-FRANCE EN ABREGE:ROCKWELL ABS-FRANCE, 88360 Rupt sur Moselle (FR)
(72) Inventeur: Prillard, Charles B., F-88360 Rupt Sur Moselle (FR)
(74) Mandataire: Hasenrader, Hubert

(56) Documents cités:
- EP-A- 0 295 068
- DE-A- 3 713 475

## Description

La présente invention concerne un pare-soleil pour véhicule automobile. Il concerne plus particulièrement un pare-soleil comportant un noyau rigide contenu dans une housse en tissu.

Il est demandé, par souci d'esthétique, d'habiller les pare-soleil d'un véhicule automobile avec le matériau formant l'habillage intérieur de ce véhicule et, en particulier, avec le matériau recouvrant la face intérieure du pavillon. Ce problème est relativement simple à résoudre lorsque le revêtement est en matériau synthétique, car on se sert alors des possibilités de collage ou de soudure offertes par ce matériau pour recouvrir le noyau formant le pare-soleil.

Mais on rencontre des difficultés lorsque le matériau d'habillage est une matière textile, un tissu par exemple, car le tissu n'est pas thermosoudable, et, pour obtenir un produit recouvert de tissu qui présente un aspect agréable à la vue, il est d'usage de coudre entre elles les différentes pièces de tissu en les superposant face externe contre face externe de manière à placer les bords des pièces, extérieurs aux lignes de couture, du côté de la face interne de la housse.

EP-A-0 289 473 décrit un procédé pour réaliser un pare-soleil comportant un noyau rigide introduit dans une poche en matière textile comportant sur l'une de ses faces une ouverture. La poche est réalisée en superposant deux pièces rectangulaires de tissu, on pique le pourtour des deux pièces en laissant une ouverture et on retourne la poche. Après avoir introduit le noyau dans cette poche, on ferme l'ouverture par un élément complémentaire, un miroir par exemple.

L'ouverture est de grande dimension pour permettre l'introduction du noyau, surtout lorsque le tissu n'est pas très extensible. Ce procédé ne peut donc être utilisé que lorsque le pare-soleil comporte un miroir ou un élément standard qui permette l'obturation de cette ouverture de grande dimension.

DE-C-3 744 831 représente l'état de la technique le plus proche de la présente invention. Il prévoit de réaliser une poche comportant une ouverture sur l'un de ses côtés, d'introduire le noyau dans la poche et de refermer ensuite l'ouverture. Pour ce faire, DE-C-3 744 831 prévoit d'introduire les lèvres de l'ouverture dans une fente ménagée sur le côté correspondant de ce noyau et de maintenir ces lèvres dans ladite fente en les reliant entre elles à l'aide d'une sonotrode par suite de l'interposition d'une bande en matière plastique qui adhère auxdites lèvres. Ce procédé a l'inconvénient de nécessiter des moyens techniques importants et, de plus, les bandes en matière plastique peuvent présenter des bavures qui nuisent à l'esthétique recherchée du pare-soleil.

Le but de la présente invention est de pallier ces inconvénients et de proposer un procédé qui permette de recouvrir de tissu tout type de pare-soleil, avec ou sans miroir, sans utilisation de matériel complexe.

L'invention concerne donc un procédé pour réaliser un pare-soleil pour véhicule automobile, du type comportant un noyau rigide contenu dans une housse en tissu, procédé selon lequel on réalise une poche de tissu comportant sur l'un de ses côtés une ouverture délimitée par des lèvres, en superposant deux pièces de tissu qui doivent recouvrir les faces du noyau de telle façon que les faces externes des pièces soient jointives, en cousant trois bords de ces pièces de manière à former ladite ouverture et en retournant la poche pour que les coutures reáliseés soient à l'intérieur de la poche, on introduit le noyau dans ladite poche par ladite ouverture et on ferme ladite ouverture en introduisant lesdites lèvres dans une rainure appropriée prévue sur le bord correspondant dudit noyau et s'étendant dans le plan général du pare-soleil, pour constituer ladite housse recouvrant le noyau (Procédé du type divulgué par DE-C-3 744 831). Le tissu peut être ou non revêtu d'une enduction PVC ou d'une couche de mousse donnant un touché plus doux.

L'invention atteint son but par le fait que le procédé proposé est caractérisé en ce que l'on réalise la poche en une matière textile élastique, en ce que l'on rigidifie les lèvres de ladite ouverture de préférence avant d'introduire ledit noyau dans ladite poche, et en ce que l'on ferme ladite ouverture, en étirant les pièces de tissu et en retournant les lèvres rigidifiées pour les présenter devant la rainure et les y introduire.

La rigidification des deux lèvres de l'ouverture permet à ces lèvres d'être maintenues dans la rainure malgré la tension qui pourrait exister dans le tissu. Elles agissent à la manière de crochets maintenant les deux parois de la housse de part et d'autre de la rainure du noyau. De plus, ces éléments permettent une mise en place plus aisée du tissu dans la rainure.

De préférence, on rigidifie lesdites lèvres en fixant, sur au moins l'une de leurs faces, des éléments de rigidification.

Avantageusement, on fixe lesdits éléments de rigidification sur la face interne de ladite poche, de manière à les rendre invisibles.

De préférence, les éléments de rigidification sont constitués par une pluralité de lamelles disposées à plat le long des lèvres de ladite ouverture.

La lamelle peut être une lamelle semi-rigide, en carton fort ou en matériau synthétique que l'on peut coller ou coudre sur la face interne de la poche.

De préférence, chaque lèvre comporte une pluralité d'éléments de rigidification, de manière à conserver à cette lèvre une certaine élasticité longitudinale facilitant l'introduction du noyau dans la poche.

D'autres caractéristiques et avantages de l'invention ressortiront à la lecture de la description faite en référence aux dessins annexés sur lesquels :
- la figure 1 montre le noyau du pare-soleil de l'invention,
- la figure 2 représente une poche en tissu destinée à habiller le noyau de la figure 1,
- la figure 3 est une coupe transversale de l'ouverture de la poche selon la ligne III-III de la figure 2,
- la figure 4 représente une coupe transversale d'un côté du pare-soleil habillé, cette coupe étant réalisée sur le côté du pare-soleil qui correspond à l'ouverture de la poche en tissu,
- la figure 5 est une coupe selon le plan médian du noyau qui montre le procédé de montage du système d'accrochage central.

La présente invention concerne l'habillage d'un pare-soleil 2 avec une matière textile, un tissu par exemple.

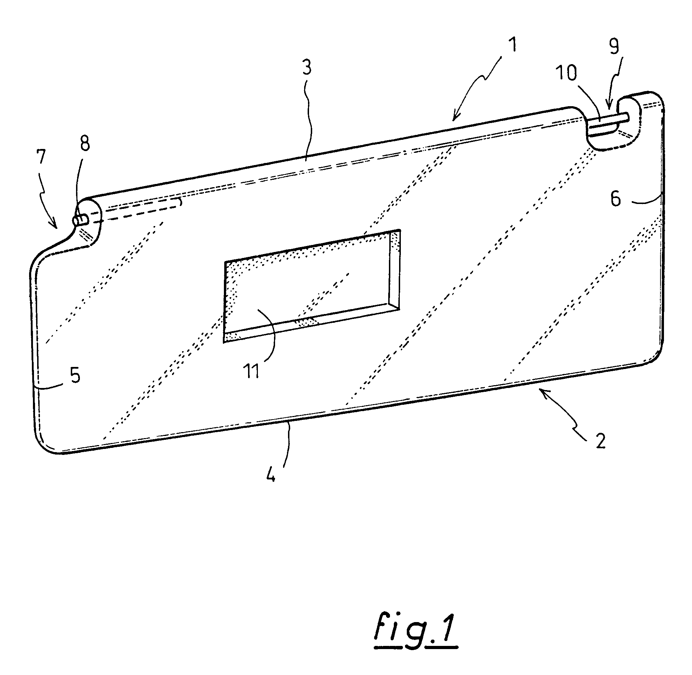

La figure 1 montre un noyau 1 de pare-soleil 2 qui est réalisé par moulage d'une mousse de polyuréthane ou d'un autre matériau et qui est destiné à être enfermé dans une housse en tissu.

Le noyau 1 de forme oblongue et sensiblement rectangulaire comporte deux grands côtés 3 et 4 et deux petits côtés latéraux 5 et 6. Il présente une échancrure 7 dans le coin délimitée par le grand côté 3 et le petit côté 5. Dans cette échancrure 7 débouche un conduit horizontal 8 destiné à loger une tige d'un bras de support, non représenté sur le dessin. Le bras de support est prévu pour fixer le pare-soleil 2 au pavillon du véhicule de telle manière que le pare-soleil 2 puisse pivoter autour d'un axe horizontal parallèle au grand côté 3 et autour d'un axe vertical situé latéralement au pare-soleil 2.

Le noyau 1 présente, de plus, sur le grand côté 3 une encoche latérale 9 qui est éloignée de l'échancrure 7 et qui est destinée à être traversée par une tige 10 parallèle au grand côté 3. Cette tige 10 peut coopérer au moins temporairement avec des moyens prévus sur le pavillon du véhicule, de manière à former un système d'accrochage central du pare-soleil 2 pour permettre son pivotement autour de l'axe de pivotement horizontal. Le noyau 1 peut, de plus, comporter sur l'une de ses faces une cavité 11 destinée à recevoir un miroir ou un autre élément (miroir éclairant, poche ...) après l'habillage du noyau 1.

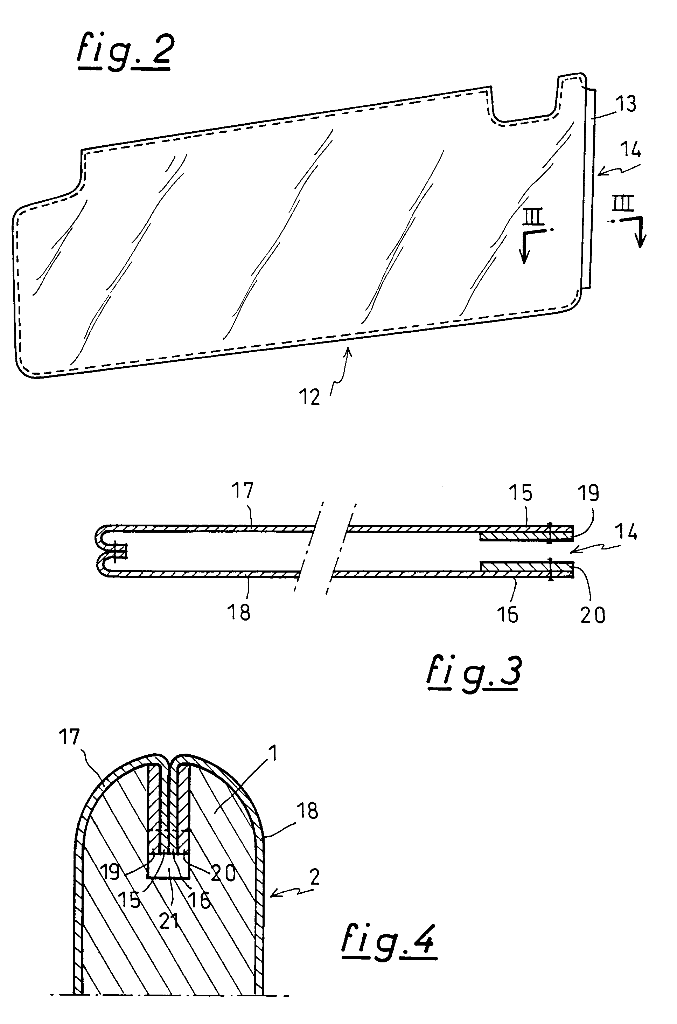

La figure 2 représente une poche en tissu 12 qui comporte sur l'un de ses côtés 13 une ouverture 14 délimitée par deux lèvres 15 et 16. Les dimensions de la poche 12 sont adaptées à celles du noyau 1 et l'ouverture 14 est suffisamment grande pour permettre l'introduction du noyau 1 à l'intérieur de la poche 12. Sur cette poche 12 un porte-carte (ou poche de pare-soleil) peut également être cousu.

La poche 12 est réalisée de manière connue en superposant les deux pièces de tissu 17 et 18 qui doivent recouvrir les faces du noyau 1, de telle façon que les faces externes des pièces 17 et 18 soient jointives, en cousant trois bords de ces pièces 17 et 18 de manière à former l'ouverture 14 sur le côté 13, et en retournant la poche 12 pour que les coutures réalisées soient à l'intérieur de la poche 12.

Après avoir introduit le noyau 1 dans la poche 2, il ne reste plus qu'à fermer cette ouverture 14.

Pour ce faire, les lèvres 15 et 16 délimitant l'ouverture 14 sont rigidifiées sur une certaine largeur à partir du bord de l'ouverture 14.

La figure 3 montre une coupe transversale de la poche 12 au droit de l'ouverture 14. Des lamelles semi-rigides 19 et 20 sont fixées aux lèvres 15 et 16 des pièces 17 et 18 par couture ou collage. Ces lamelles 19 et 20 s'étendent de préférence sur toute la longueur des lèvres 15 et 16 et elles sont formées soit en une seule pièce soit par juxtaposition d'une pluralité de lamelles ce qui permet de donner à la poche 12 une certaine élasticité au niveau de l'ouverture 14, de façon à faciliter l'introduction du noyau 1 à l'intérieur de la poche 12. Les lamelles 19 et 20 sont tirées d'une baguette plate en carton ou en matériau plastique.

Le noyau 1 présente sur son côté voisin de l'ouverture 14 de la poche 12 une rainure 21 longitudinale qui s'étend sensiblement dans le plan médian du noyau 1.

La rainure 21 a une profondeur et une épaisseur prévues pour recevoir les lèvres 15 et 16 rigidifiées par les lamelles 19 et 20, comme on peut le voir sur la figure 4. Cette introduction des lèvres rigidifiées 15 et 16 dans la rainure 21 est réalisée manuellement en étirant successivement les pièces de tissu 17 ou 18 et en retournant la lèvre correspondante 15 ou 16 pour la présenter devant la rainure 21. Chaque lamelle 19 ou 20 est fermement tenue dans la rainure 21 grâce à l'élasticité du tissu, et le bord correspondant du pare-soleil présente un aspect esthétique.

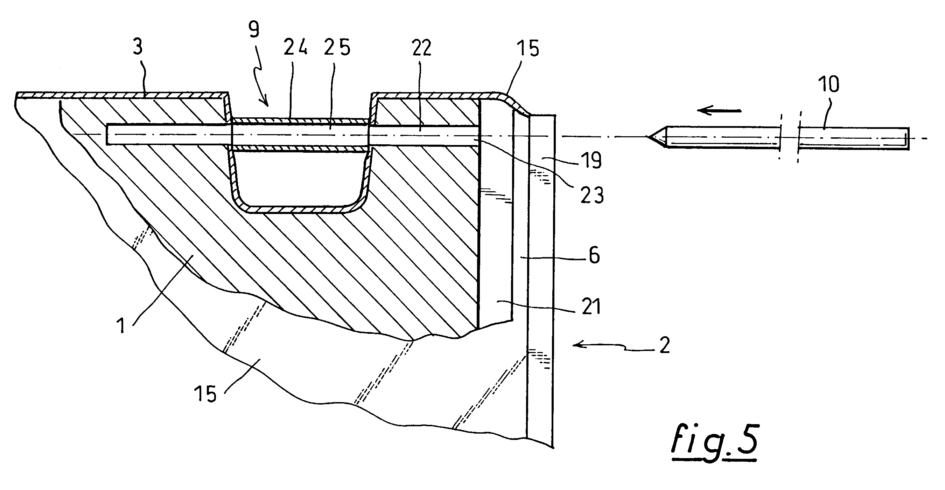

La figure 5 montre le mode de montage du système d'accrochage central formé par la tige 10 qui doit traverser l'encoche latérale 9. Le noyau 1 est pourvu d'un conduit 22 qui débouche sur le côté 6 par un orifice 23.

Le conduit 22 est parallèle au grand côté 3. Il se prolonge au-delà de l'encoche latérale 9 et il a une longueur légèrement plus grande que la longueur de la tige 10.

La tige 10 est enfilée dans le conduit 22 par l'orifice 23 après que le noyau 1 ait été introduit dans la poche en tissu 12. Il est à noter que le conduit 22 n'est pas obligatoire si la mousse est suffisamment friable pour enfiler la tige 10.

On peut présenter un tube 24 entre les parois de l'encoche 9 de telle manière que sa cavité interne 25 puisse être traversée par la tige 10. La tige 10 a une longueur suffisante pour traverser de part en part l'encoche latérale 9 lorsqu'elle est introduite dans le conduit 22. La tige 21 peut présenter une pointe à l'une de ses extrémités pour transpercer le tissu au droit de l'encoche 9. La présence du tube 24 permet de cacher les effilochages provoqués par le transpercement du tissu et permet également d'avoir un diamètre d'axe d'accrochage différent de celui de la tige 10.

De préférence l'ouverture 14 de la poche 12 est prévue sur le côté de poche correspondant au petit côté 6 du noyau 1, et la tige 10 est enfilée dans le conduit 22 par l'ouverture 14 de la poche 12, et avant la fermeture de celle-ci.

La poche 12 utilisée pour la mise en oeuvre des procédés décrits ci-dessus peut être adaptée pour des fonctions auxiliaires du pare-soleil. La poche 12 peut en particulier comporter des ouvertures complémentaires permettant par exemple la fixation d'un miroir dans la cavité 11 ou le passage d'une alimentation électrique éventuelle.

Elle peut également être munie sur l'une de ses faces d'une bande transversale formant porte-cartes, et être renforcées par une feuille en PVC.

## Revendications

1. Procédé pour réaliser un pare-soleil (2) pour véhicule automobile, du type comportant un noyau (1) rigide contenu dans une housse en tissu, procédé selon lequel on réalise une poche en tissu (12) comportant sur l'un de ses côtés (13) une ouverture (14) délimitée par des lèvres (15, 16), en superposant deux pieces de tissu (17, 18) qui doivent recouvrir les faces du noyau (1), de telle façon que les faces externes des pièces soient jointives, en cousant trois bords de ces pièces de manière à former ladite ouverture (14) et en retournant la poche (12) pour que les coutures réalisées soient à l'intérieur de la poche, on introduit le noyau (1) dans ladite poche (12) par ladite ouverture (14) et on ferme ladite ouverture (14) en introduisant lesdites lèvres (15, 16) dans une rainure appropriée (21) prévue sur le bord (6) correspondant dudit noyau (1) et s'étendant dans le plan général du pare-soleil (2), pour constituer ladite housse recouvrant le noyau (1), caractérisé en ce que l'on réalise la poche en une matière textile élastique, en ce que l'on rigidifie les lèvres (15, 16) de ladite ouverture (14) de préférence avant d'introduire ledit noyau (1) dans ladite poche (12), et en ce que l'on ferme ladite ouverture (14), en étirant les pièces de tissu (17, 18) et en retournant les lèvres (15, 16) rigidifiées pour les présenter devant la rainure (21) et les y introduire.

2. Procédé selon la revendication 1, caractérisé en ce que l'on rigidifie lesdites lèvres (15, 16) en fixant, sur au moins l'une de leurs faces, des éléments de rigidification (19, 20).

3. Procédé selon la revendication 2, caractérisé en ce que l'on fixe lesdits éléments de rigidification (19, 20) sur la face interne de ladite poche (12).

4. Procédé selon la revendication 3, caractérisé en ce que les éléments de rigidification (19, 20) sont constitués par des lamelles disposées à plat le long des lèvres (15, 16) de ladite ouverture (14).

5. Procédé selon l'une quelconque des revendications 2 à 4, caractérisé en ce que chaque lèvre (15, 16) comporte une pluralité d'éléments de rigidification (19, 20), de manière à conserver a cette lèvre (15, 16) une certaine élasticité longitudinale facilitant l'introduction du noyau (1) dans la poche (12).

6. Procédé selon l'une quelconque des revendications 1 à 5 pour réaliser un pare-soleil comportant un système d'accrochage central constitué d'une tige (10) disposée parallèlement à un grand côté (3) dudit pare-soleil (2) et traversant une encoche latérale (9) ménagée sur ledit grand côté (3),
caractérisé en ce que l'on prévoit dans le noyau (1) un conduit (22) débouchant sur un côté (6) du noyau (1) par un orifice (23), et en ce que l'on monte ledit système d'accrochage, après l'introduction du noyau (1) dans ladite poche (12), en enfilant ladite tige (10) dans ledit conduit (22) par ledit orifice (23).

7. Procédé selon l'une des revendications dépendantes, caractérisé en ce que l'on prévoit l'ouverture (14) de la poche (12) sur le côté du noyau (1) où débouche ledit conduit (22) et en ce que l'on enfile ladite tige (10) par ladite ouverture (14) avant de la fermer.

8. Procédé selon l'une quelconque des revendications 6 et 7, caractérisé en ce que l'on positionne un tube creux (24) dans ladite encoche (9) et au droit dudit conduit (22), avant d'enfiler ladite tige (10) de telle manière que celle-ci puisse supporter ledit tube (24) lorsqu'elle est enfilée.

## Claims

1. Process for the manufacture of a vehicle sun-visor (2), of the type comprising a rigid core (1) enclosed in a fabric cover, process wherein a fabric pocket (12) is produced, which pocket comprises on one of its sides (13) an opening (14) defined by lips (15, 16), by superimposing two pieces of fabric (17, 18) which are meant to cover the faces of the core (1), in such a way that the external faces of the pieces are joined, by sewing three edges of said pieces in such a way as to form said opening (14) and by turning the pocket (12) inside out so that the seams produced are inside the pocket, the core (1) is inserted into the said pocket (12) through said opening (14) by introducing said lips (15, 16) in a suitable groove (21) provided on the edge (6) corresponding to said core (1) and extending in the general plane of the sun-visor (2), to constitute said cover covering the core (1), characterised in that the pocket is produced in an elastic textile material, in that the lips (15, 16) of said opening (14) are preferably stiffened before said core (1) is inserted into said pocket (12), and in that said opening (14) is closed by stretching the pieces of fabric (17, 18) and by turning the stiffened lips (15, 16) inside out so as to present them in front of the groove (21) and introduce them therein.

2. Process according to claim 1, characterised in that said lips (15, 16) are stiffened by fixing stiffening elements (19, 20) to at least one of their faces.

3. Process according to claim 2, characterised in that said stiffening elements (19, 20) are fixed to the inner face of said pocket (12).

4. Process according to claim 3, characterised in that the stiffening elements (19, 20) consist of thin strips disposed horizontally along the lips (15, 16) of said opening (14).

5. Process according to any one of claims 2 to 4, characterised in that each lip (15, 16) comprises a plurality of stiffening elements (19, 20), so as to maintain a certain longitudinal elasticity of the lips (15, 16) to facilitate the insertion of the core (1) into the the pocket (12).

6. Process according to any one of claims 1 to 5 for the manufacture of a sun-visor comprising a central fastening system consisting of a rod (10) disposed in parallel to one large side (3) of said sun-visor (2) and traversing a lateral slot (9) formed on said large side (3), characterised in that a channel (22) opening on to one side (6) of the core (1) via an orifice (23) is provided in the core (1), and in that, after the insertion of the core (1) into said pocket (12), said fastening system is mounted by slipping said rod (10) into said channel (22) through the said orifice (23).

7. Process according to one of the dependent claims, characterised in that the opening (14) of the pocket (12) is provided at the side of the core (1) on to which said channel (22) opens and in said rod (10) is slipped through said opening (14) before it is closed.

8. Process according to any one of claims 6 and 7, characterised in that a hollow tube (24) is placed in said slot (9) and at right angles with said channel (22), before said rod (10) is inserted in such a manner that it can support said tube (24) when it is inserted.

## Patentansprüche

1. Verfahren zur Herstellung einer Sonnenblende (2) für ein Kraftfahrzeug, der Art umfassend einen starren, in einem Schutzbezug befindlichen Kern (1), und zwar ein Verfahren, nach dem man eine Stofftasche (12) herstellt, die auf einer ihrer Seiten (13) eine von Rändern (15, 16) begrenzte Öffnung (14) hat, indem man zwei Stoffstücke (17, 18) übereinanderlegt, welche die Seiten des Kerns (1) in der Weise bedecken müssen, daß die Außenseiten der Stücke aneinanderstoßen, und drei Kanten dieser Stücke zusammennäht, um die genannte Öffnung (14) zu bilden, und indem man die Tasche (12) wendet, damit die angebrachten Nähte sich innerhalb der Tasche befinden, man den Kern (1) durch die Öffnung (14) in diese Tasche (12) steckt und diese Öffnung (14) schließt, indem man die genannten Ränder (15, 16) in eine entsprechende Rille (21) führt, die an der entsprechenden Kante (6) des Kerns (1) vorgesehen ist und sich auf der allgemeinen Ebene der Sonnenblende (2) erstreckt, um den genannten Schutzbezug des Kerns (1) zu bilden, dadurch gekennzeichnet, daß man die Tasche aus einem elastischen Textilmaterial herstellt und vorzugsweise vor dem Einführen des Kerns (1) in die Tasche (12) die Ränder (15, 16) der Öffnung (14) versteift, sowie dadurch, daß man die Öffnung (14) schließt, indem man die Stoffstücke (17, 18) streckt und die versteiften Ränder (15, 16) umstülpt, damit sie vor der Rille (21) zu liegen kommen, und sie darin einführt.

2. Verfahren nach Anspruch 1, dadurch gekennzeichnet, daß man die genannten Ränder (15, 16) versteift, indem man an mindestens einer ihrer Seiten Versteifungselemente (19, 20) anbringt.

3. Verfahren nach Anspruch 2, dadurch gekennzeichnet, daß man die besagten Versteifungselemente (19, 20) an der Innenseite der genannten Tasche (12) anbringt.

4. Verfahren nach Anspruch 3, dadurch gekennzeichnet, daß die Versteifungselemente (19, 20) aus entlang der Ränder (15, 16) der Öffnung (14) liegend angeordneten Stäben bestehen.

5. Verfahren nach einem der Ansprüche 2 bis 4, dadurch gekennzeichnet, daß jeder Rand (15, 16) mehrere Versteifungselemente (19, 20) aufweist, damit dieser Rand (15, 16) der Länge nach eine gewisse Elastizität behält, wodurch das Einführen des Kerns (1) in die Tasche (12) erleichtert wird.

6. Verfahren nach einem der Ansprüche 1 bis 5 zur Herstellung einer Sonnenblende mit einem zentralen Befestigungssystem, das aus einer Stange (10) besteht, die parallel zu einer Längsseite (3) dieser Sonnenblende (2) angeordnet ist und durch eine seitliche Einkerbung (9) führt, die an dieser Längsseite (3) vorgesehen ist,
dadurch gekennzeichnet, daß man in dem Kern (1) einen Kanal (22) vorsieht, der auf einer Seite (6) des Kerns (1) in einer Öffnung (23) mündet, und dadurch, daß man das genannte Befestigungssystem nach dem Einführen des Kerns (1) in die Tasche (12) durch Einschieben der Stange (10) in diesen Kanal (22) durch die genannte Öffnung (23) anbringt.

7. Verfahren nach einem der abhängigen Ansprüche, dadurch gekennzeichnet, daß man die Öffnung (14) der Tasche (12) an der Seite des Kerns (1 vorsieht, an welcher der genannte Kanal (22) mündet, und daß man die Stange (10) durch die Öffnung (14) führt, bevor man diese verschließt.

8. Verfahren nach einem der Ansprüche 6 und 7, dadurch gekennzeichnet, daß man ein Hohlrohr (24) in der Einkerbung (9) und im Bereich des Kanals (22) vorsieht, bevor die Stange (10) eingeführt wird, und zwar so, daß diese das Hohlrohr (24) tragen kann, wenn sie eingeführt ist.
